(19) Europäisches Patentamt / European Patent Office / Office européen des brevets

(11) **EP 3 584 587 B1**

(12) **EUROPEAN PATENT SPECIFICATION**

(45) Date of publication and mention
of the grant of the patent:
**09.02.2022  Bulletin 2022/06**

(21) Application number: **19177206.0**

(22) Date of filing: **29.05.2019**

(51) International Patent Classification (IPC):
***G01P 3/50*** *(2006.01)*     ***G01P 3/49*** *(2006.01)*
***G01P 3/66*** *(2006.01)*

(52) Cooperative Patent Classification (CPC):
**G01P 3/505; G01P 3/49; G01P 3/50**

(54) **SPEED DETECTING DEVICE AND SPEED DETECTING METHOD**

GESCHWINDIGKEITSERFASSUNGSVORRICHTUNG UND
GESCHWINDIGKEITSERFASSUNGSVERFAHREN

DISPOSITIF ET PROCÉDÉ DE DÉTECTION DE VITESSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.05.2018  JP 2018102397**

(43) Date of publication of application:
**25.12.2019  Bulletin 2019/52**

(73) Proprietor: **Nabtesco Corporation
Tokyo (JP)**

(72) Inventors:
  • **FLANKL, Michael**
    **8092 Zürich (CH)**
  • **TUEYSUEZ, Arda**
    **8092 Zürich (CH)**
  • **KOLAR, Johann W.**
    **8092 Zürich (CH)**
  • **TSUKADA, Yusuke**
    **Shimogyo-ku, Kyoto-shi, Kyoto (JP)**
  • **NAKAMURA, Kazuhito**
    **Shimogyo-ku, Kyoto-shi, Kyoto (JP)**

(74) Representative: **Grünecker Patent- und
Rechtsanwälte
PartG mbB
Leopoldstraße 4
80802 München (DE)**

(56) References cited:
**EP-A1- 3 309 945          WO-A1-2018/047483
DE-A1-102011 114 506    GB-A- 2 169 712
US-A- 3 462 675**

## Description

### TECHNICAL FIELD

The present invention relates to a speed detecting device and a speed detecting method for detecting a speed without contact.

### BACKGROUND

Speed detecting devices are shown for example in US 3 462 674 A, GB 2 169 712 A, DE 10 2011 114506 A1, EP 3 309 945 A1 and WO 2018/047483 A1. A bicycle dynamo that produces electricity without contact is disclosed in Patent Literature 1, which is US-A-2014/132155 .

In the bicycle dynamo of Patent Literature 1, an annular permanent magnet rotates about a rotation axis extending in a direction orthogonal to a rotation axis of a wheel of a bicycle, an outer peripheral surface of the permanent magnet being disposed at a distance from a side surface of the wheel continuous with an outer peripheral surface thereof.

The permanent magnet includes a plurality of magnetic poles aligned in a circumferential direction, and magnetization directions of each pair of adjacent ones of the magnetic poles are opposite to each other. For example, when the wheel rotates in a state where an N pole of the permanent magnet is disposed to be opposed to the side surface of the wheel, an eddy current is produced on the side surface of the wheel in such a direction as to hinder a change in magnetic flux from the permanent magnet. A repulsive force and an attractive force between a magnetic flux produced by the eddy current and the magnetic flux from the permanent magnet cause the permanent magnet to rotate in a rotational direction of the wheel.

Therefore, when a coil is wound around the permanent magnet so that a magnetic flux from the permanent magnet is linked with the coil, it is possible to obtain induced electric power from the coil.

Although it is also possible to estimate a moving speed of the bicycle by detecting a rotating speed of the permanent magnet of Patent Literature 1, slipping of the permanent magnet may occur, in which case it is no longer possible to accurately estimate the moving speed of the bicycle. Patent Literature 1 includes no disclosure of how to prevent slipping of the permanent magnet, and hence the technique of Patent Literature 1 might fail to accurately estimate the moving speed of the bicycle.

### SUMMARY

In order to solve the above-described problem, an aspect of the present invention provides a speed detecting device including the features of claim 1.

Such a device includes in particular a magnetic flux producing unit spaced apart from a principal surface of a relative moving body and configured to produce a magnetic flux changing at a predetermined frequency so that a magnetization pattern is formed on the principal surface in accordance with movement or rotation of the relative moving body, a magnetic flux detecting unit spaced apart from the principal surface of the relative moving body and configured to detect an induced voltage induced based on a magnetic flux produced by the magnetization pattern on the principal surface, a magnetic flux frequency control unit for controlling the predetermined frequency so that the induced voltage detected by the magnetic flux detecting unit becomes zero, and a speed estimating unit for estimating a moving or rotating speed of the relative moving body in a state where the induced voltage detected by the magnetic flux detecting unit is zero, based on the predetermined frequency controlled by the magnetic flux frequency control unit.

### BRIEF DESCRIPTION OF THE DRAWINGS

Fig. 1 is a view showing a schematic configuration of a speed detecting device according to a first embodiment of the present invention.
Fig. 2 is a view obtained by adding a magnetic flux change speed detecting unit to the speed detecting device shown in Fig. 1.
Fig. 3 is a view schematically showing magnetic force lines produced from a permanent magnet of rotor.
Fig. 4 is a graph showing a density of magnetic fluxes linked with a detection coil.
Fig. 5 is a view showing a schematic configuration of a speed detecting device according to a second embodiment.
Fig. 6 is a circuit diagram showing one specific example of an alternating current power source.
Fig. 7 is a view showing a schematic configuration of a speed detecting device according to a third embodiment.
Fig. 8A is a graph of a magnetic flux density in a case where the detection coil vertically overlaps with two magnet-

EP 3 584 587 B1

ization patterns.
Fig. 8B is a graph of a magnetic flux density in a case where the detection coil is positionally shifted from the two magnetization patterns in a vertical direction.
Fig. 9 is a view showing a schematic configuration of a speed detecting device according to a fourth embodiment, which is not covered by the claims.
Fig. 10 is a view showing an example in which a principal surface of a relative moving body is disposed to be opposed to an outer peripheral surface of a rotor while a predetermined gap is maintained therebetween.
Fig. 11 is a view showing a schematic configuration of a speed detecting device obtained by adding a gap estimating unit to the configuration shown in Fig. 9.
Fig. 12 is a graph showing a density of magnetic fluxes linked with the detection coil.

**DESCRIPTION OF EXAMPLE EMBODIMENTS**

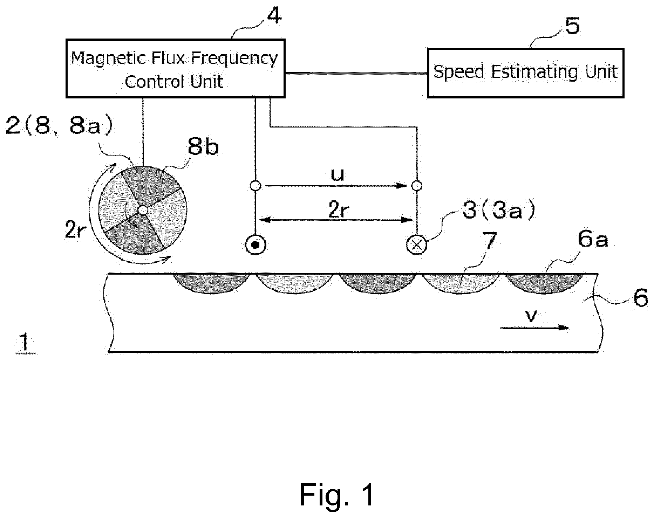

With reference to the appended drawings, the following describes an embodiment of the present disclosure. In the drawings appended hereto, for the sake of convenience of illustration and ease of understanding, a scale size, an aspect ratio, and the like are altered as appropriate from those of real things for emphasis.
Moreover, terms, values, and so on used herein to specify a shape, a geometric condition, and an extent thereof, such as, for example, terms including "parallel," "orthogonal," and "equal" and values of a length and an angle, are not bound to a strict meaning thereof but should be interpreted as covering a range that can be expected to achieve similar functionality.
(First Embodiment) Fig. 1 is a view showing a schematic configuration of a speed detecting device 1 according to a first embodiment of the present invention. The speed detecting device 1 shown in FIG. 1 includes a magnetic flux producing unit 2, a magnetic flux detecting unit 3, a magnetic flux frequency control unit 4, and a speed estimating unit 5.
The magnetic flux producing unit 2 produces a magnetic flux changing at a predetermined frequency so that a magnetization pattern 7 is formed on a principal surface 6a of a relative moving body 6 as the relative moving body 6 moves or rotates, the magnetic flux producing unit 2 being disposed at a distance from the principal surface 6a of the relative moving body 6. More specifically, the magnetic flux producing unit 2 may be a rotor 8 including a permanent magnet 8a rotatable about a rotation axis. The permanent magnet 8a includes a plurality of magnetic poles 8b arranged in a circumferential direction of the rotor 8. As the rotor 8 rotates, the magnetization pattern 7 is formed by a magnetic flux from the magnetic poles 8b disposed to be opposed at a distance to the principal surface 6a of the relative moving body 6. Herein, the magnetization pattern 7 refers to an area in which an intensity of magnetization is substantially the same, and the intensity of magnetization in the magnetization pattern 7 is different from that in a region outside the magnetization pattern 7. In a case where a plurality of magnetization patterns 7 are present on the principal surface 6a of the relative moving body 6, the individual magnetization patterns 7 may be different in intensity of magnetization.
The magnetic flux detecting unit 3 detects an induced voltage induced based on a magnetic flux produced by the magnetization pattern 7, the magnetic flux detecting unit 3 being disposed at a distance from the principal surface 6a of the relative moving body 6. More specifically, the magnetic flux detecting unit 3 includes a detection coil 3a having a diameter corresponding to an interval between the magnetic poles 8b of the permanent magnet 8a in the magnetic flux producing unit 2. The detection coil 3a may have any number of turns.
The following describes an example in which the detection coil 3a is used as the magnetic flux detecting unit 3.
The magnetic flux frequency control unit 4 controls a frequency at which the magnetic flux producing unit 2 causes a change in magnetic flux so that an induced voltage detected by the magnetic flux detecting unit 3 becomes zero. More specifically, the magnetic flux frequency control unit 4 controls a moving or rotating speed of the relative moving body 6 to be equal to a rotating speed of the rotor 8 so that the induced voltage detected by the magnetic flux detecting unit 3 becomes zero. During a time period in which the relative moving body 6 is moving or rotating, the magnetic flux frequency control unit 4 may continuously control the rotating speed of the rotor 8 so that the induced voltage detected by the magnetic flux detecting unit 3 becomes zero.
The speed estimating unit 5 estimates the moving or rotating speed of the relative moving body 6 in a state where the induced voltage detected by the magnetic flux detecting unit 3 is zero, based on the frequency controlled by the magnetic flux frequency control unit 4. Based on a frequency produced in the magnetic flux producing unit 2 when the induced voltage detected by the magnetic flux detecting unit 3 becomes zero, the speed estimating unit 5 can estimate the moving or rotating speed of the relative moving body 6 without detecting the rotating speed of the rotor 8.
The relative moving body 6 is a magnetic body having the principal surface 6a on which the magnetization pattern 7 can be formed by the magnetic flux producing unit 2.

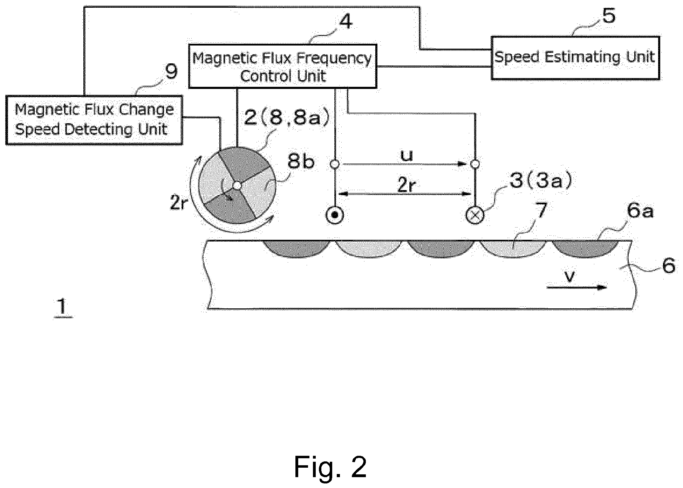

Fig. 2 is a view obtained by adding a magnetic flux change speed detecting unit 9 to the speed detecting device 1 shown in Fig. 1. The magnetic flux change speed detecting unit 9 detects a frequency at which the magnetic flux producing unit 2 causes a change in magnetic flux. In a case where the magnetic flux producing unit 2 is the rotor 8, using an unshown Hall element or the like, the magnetic flux change speed detecting unit 9 detects the rotating speed

3

of the rotor 8. In this case, the speed estimating unit 5 estimates the moving or rotating speed of the relative moving body 6 in a state where the induced voltage detected by the magnetic flux detecting unit 3 is zero, based on the frequency detected by the magnetic flux change speed detecting unit 9 (more specifically, the rotating speed of the rotor 8). The moving or rotating speed of the relative moving body 6 can be estimated using Formula (1) below.

## Moving (Rotating) Speed of Relative Moving Body 6 = Circumferential Speed of

## Rotor 8 = 2 x π x Radius of Rotor 8 x Number of Rotations of Rotor 8 ... (1)

The rotor 8 should ideally rotate at a rotating speed equal to the moving or rotating speed of the relative moving body 6. In reality, however, due to friction or the like, the rotating speed of the rotor 8 is lower than the moving or rotating speed of the relative moving body 6. Herein, a situation in which the rotating speed of the rotor 8 is slower than the moving or rotating speed of the relative moving body 6 is referred to as slipping of the rotor 8.

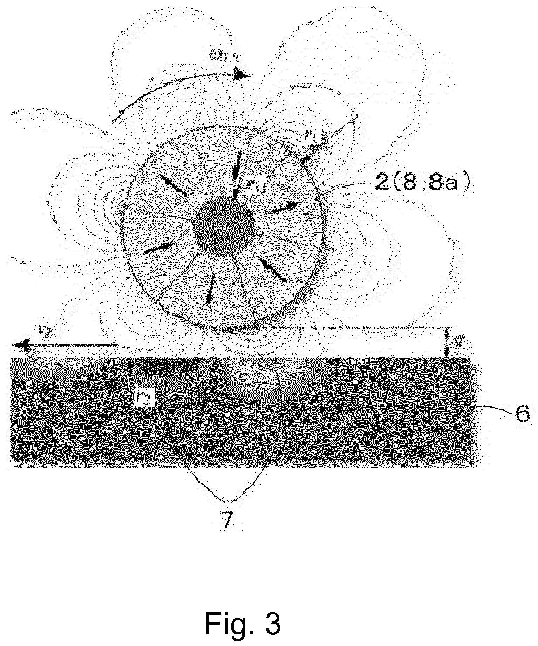

Fig. 3 is a view schematically showing magnetic force lines produced from the permanent magnet 8a of the rotor 8. The permanent magnet 8a shown in Fig. 3 has four magnetic poles (two N poles and two S poles) arranged in the circumferential direction. The permanent magnet 8a may have any number of magnetic poles. The magnetic force lines emanating from each of the N poles pass over the principal surface 6a of the relative moving body 6 and then travel toward one of the S poles adjacent thereto. By these magnetic poles, an N pole-magnetized magnetization pattern 7 and an S pole-magnetized magnetization pattern 7 are alternately formed in proximity to each other on the surface of the relative moving body 6 along a moving direction of the relative moving body 6. From the magnetization patterns 7, the magnetic force lines are emanating in directions corresponding to polarities thereof. The magnetic force lines from each of the magnetization patterns 7 are provided in a path along which the magnetic force lines pass through the air, travel inside the relative moving body 6, and return to the each of the magnetization patterns 7.

Each of the magnetization patterns 7 has a size depending on the moving or rotating speed of the relative moving body 6 and the rotating speed of the rotor 8. When the moving or rotating speed of the relative moving body 6 is equal to the rotating speed of the rotor 8, regardless of the moving or rotating speed of the relative moving body 6, the magnetization patterns 7 have a constant size.

For example, in a case where the rotating speed of the rotor 8 is equal to the moving speed of the relative moving body 6, the detection coil 3a has a diameter defined by a combined region of the two adjacent magnetization patterns 7 having the opposite polarities. Accordingly, while a substantially equal amount of magnetic force lines from each of the two magnetization patterns 7 are linked with the detection coil 3a, since respective directions of the magnetic force lines from the two magnetization patterns 7 are opposite to each other, magnetic fluxes linked with the detection coil 3a cancel out each other and thus become substantially zero. Therefore, no induced voltage is produced in the detection coil 3a, and thus no induced current flows therethrough.

The detection coil 3a may have any diameter defined by a combined size of even number of magnetization patterns 7. For example, in a case where the detection coil 3a has a diameter defined by a combined size of 2n (n is an integer of 1 or more) magnetization patterns 7, n magnetic fluxes in a positive direction and n magnetic fluxes in a negative direction, which are linked with the detection coil 3a, cancel out each other, and thus an induced voltage in the detection coil 3a becomes zero. For the sake of simplified explanation, the following describes an example in which the detection coil 3a has a diameter defined by a combined size of two magnetization patterns 7.

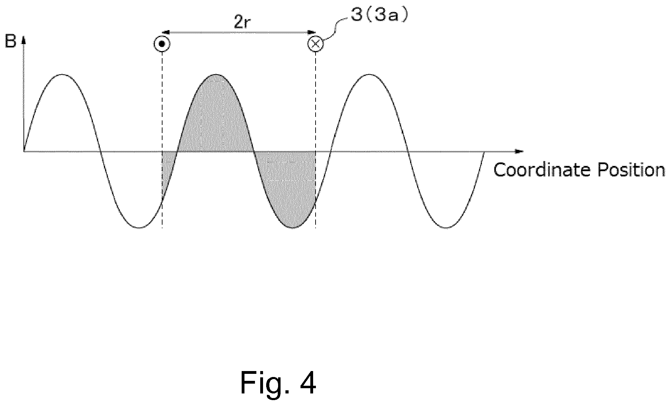

Fig. 4 is a graph showing a density of magnetic fluxes linked with the detection coil 3a. In the graph of Fig. 4, a horizontal axis indicates a coordinate position of the relative moving body 6 in a moving or rotating direction thereof, and a vertical axis indicates a magnetic flux density B[T]. In Fig. 4, a hatched region represents a density of magnetic fluxes linked with the detection coil 3a. The density of magnetic fluxes linked with the detection coil 3a in a positive direction has an area equal to that in a negative direction, and these magnetic fluxes in the positive and negative directions cancel out each other, so that no induced voltage is produced in the detection coil 3a, and thus no induced current flows therethrough.

In this embodiment, the magnetic flux frequency control unit 4 controls a frequency of a magnetic flux, thus controlling the rotating speed of the rotor 8 to be equal to the moving or rotating speed of the relative moving body 6. Accordingly, the magnetization patterns 7 are controlled to have a constant size. Therefore, with the detection coil 3a preset to have a diameter defined by a combined size of the two magnetization patterns 7, when a current flowing through the detection coil 3a is zero, i.e. when an induced voltage induced in the detection coil 3a is zero, it can be determined that the rotating speed of the rotor 8 is equal to the moving or rotating speed of the relative moving body 6.

The magnetic flux frequency control unit 4 includes, for example, an unshown motor for driving a rotary shaft of the rotor 8 to rotate. The magnetic flux frequency control unit 4 adjusts a rotational drive force of the motor and thus controls the rotating speed of the rotor 8. More specifically, the magnetic flux frequency control unit 4 controls the magnetic flux detecting unit 3 to detect an induced voltage induced in the detection coil 3a, and based on a result of the detection, controls the rotating speed of the rotor 8 so that the induced voltage becomes zero.

The speed estimating unit 5 shown in Fig. 1 estimates the moving or rotating speed of the relative moving body 6 in a state where an induced voltage in the detection coil 3a is zero, based on a frequency of a magnetic flux controlled by the magnetic flux frequency control unit 4. On the other hand, the speed estimating unit 5 shown in Fig. 2 estimates the moving or rotating speed of the relative moving body 6 in a state where an induced voltage in the detection coil 3a is zero, based on the rotating speed of the rotor 8 detected by the magnetic flux change speed detecting unit 9. When an induced voltage in the detection coil 3a is zero, the rotating speed of the rotor 8 can be regarded as being equal to the moving or rotating speed of the relative moving body 6, and thus the speed estimating unit 5 can easily estimate the moving or rotating speed of the relative moving body 6.

As described above, in the first embodiment, even in a case where a distance between the relative moving body 6 and the magnetic flux producing unit 2 changes, the moving or rotating speed of the relative moving body 6 can be estimated based on a frequency produced by the magnetic flux producing unit 2 when an induced voltage detected by the magnetic flux detecting unit 3 becomes zero. This embodiment addresses the following circumstances. That is, in a case where the rotor 8 is disposed to be opposed at a distance to the principal surface 6a of the relative moving body 6, and the moving or rotating speed of the relative moving body 6 is estimated from the rotating speed of the rotor 8 configured to rotate as the relative moving body 6 moves or rotates, due to a speed difference (slipping) between the rotor 8 and the relative moving body 6, the moving or rotating speed of the relative moving body 6 cannot be accurately estimated. In this embodiment, in order to detect a state where slipping of the rotor 8 is zero, the rotor 8 is purposely driven to rotate by the magnetic flux frequency control unit 4 so that an induced voltage in the detection coil 3a becomes zero. When an induced voltage in the detection coil 3a has become zero, the rotating speed of the rotor 8 can be regarded as being equal to the moving or rotating speed of the relative moving body 6, and thus the moving or rotating speed of the relative moving body 6 can be easily estimated from the rotating speed of the rotor 8.

Furthermore, this embodiment actively uses the magnetization pattern 7 formed on the principal surface 6a of the relative moving body 6 by a magnetic force of the permanent magnet 8a of the rotor 8. The rotating speed of the rotor 8 is controlled to be equal to the moving or rotating speed of the relative moving body 6 so that the magnetization patterns 7 on the principal surface 6a of the relative moving body 6 have an equal size. Further, the detection coil 3a has a diameter defined by a combined size of the two magnetization patterns 7, and thus an amount of magnetic fluxes in the positive direction from one of the magnetization patterns 7 and an amount of magnetic fluxes in the negative direction from the other magnetization pattern 7, which are linked with the detection coil 3a when the rotating speed of the rotor 8 is equal to the moving or rotating speed of the relative moving body 6, can be cancelled out. Therefore, without being affected by a gap variation, the moving or rotating speed of the relative moving body 6 can be accurately estimated using a simple configuration.

(Second Embodiment) A second embodiment differs from the first embodiment in configuration of the magnetic flux producing unit 2.

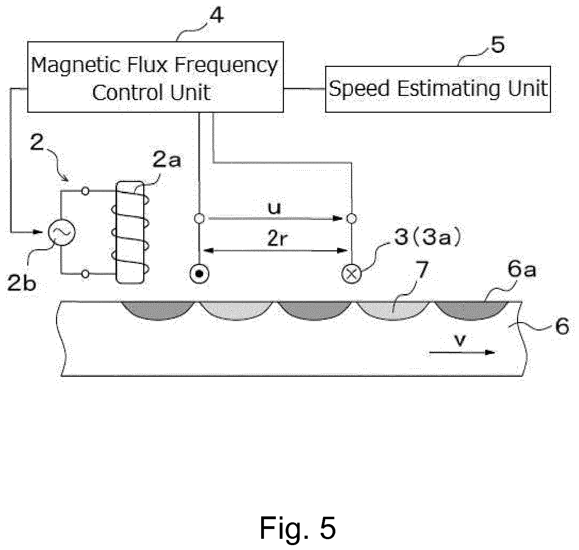

Fig. 5 is a view showing a schematic configuration of a speed detecting device 1 according to the second embodiment. Similarly to the speed detecting device 1 shown in Fig. 1, the speed detecting device 1 shown in Fig. 5 includes a magnetic flux producing unit 2, a magnetic flux detecting unit 3, a magnetic flux frequency control unit 4, and a speed estimating unit 5.

The magnetic flux producing unit 2 shown in Fig. 5 includes an excitation coil 2a and an alternating current power source 2b. The excitation coil 2a produces a magnetic flux changing a polarity of a magnetization pattern 7 at a predetermined frequency, the magnetization pattern 7 being formed on a principal surface 6a of a relative moving body 6. The alternating current power source 2b passes an alternating current through the excitation coil 2a. Based on a control signal from the magnetic flux frequency control unit 4, the alternating current power source 2b switches a frequency of the alternating current. Thus, a direction of the current flowing through the excitation coil 2a changes to cause a direction of a magnetic flux produced from the excitation coil 2a to be inverted. The magnetic flux produced from the excitation coil 2a passes over the principal surface 6a of the relative moving body 6. At this time, on the principal surface 6a of the relative moving body 6, there is formed the magnetization pattern 7 having a polarity corresponding to the direction of the current flowing through the excitation coil 2a.

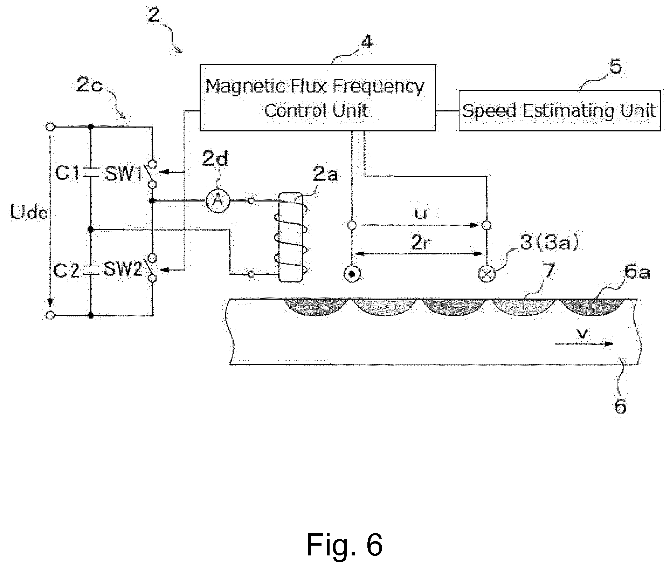

Fig. 6 is a circuit diagram showing a specific example of the alternating current power source 2b. As shown in Fig. 6, the magnetic flux producing unit 2 includes an oscillation circuit 2c and an ammeter 2d. The oscillation circuit 2c includes two capacitors C1 and C2 and two switches SW1 and SW2. The two capacitors C1 and C2 are connected in series between two terminals to which a direct-current voltage Udc is applied. The two switches SW1 and SW2 are also connected in series between the two terminals to which the direct-current voltage Udc is applied. One end of the excitation coil 2a is connected to a connection node between the two switches SW1 and SW2 via the ammeter 2d, and the other end of the excitation coil 2a is connected to a connection node between the two capacitors C1 and C2. A switching frequency of the switches SW1 and SW2 can be controlled based on a control signal from the magnetic flux frequency control unit 4.

The magnetic flux frequency control unit 4 controls a frequency at which a direction of the current passed through the excitation coil 2a is switched so that an induced voltage detected by a detection coil 3a becomes zero.

The polarity of the magnetization pattern 7 on the principal surface 6a of the relative moving body 6 changes with the direction of the current flowing through the excitation coil 2a, and thus using the frequency at which the direction of the current flowing through the excitation coil 2a is switched, a size of the magnetization pattern 7 on the relative moving body 6 can be adjusted.

In this embodiment, a diameter of the detection coil 3a is preset to a given length. The magnetic flux frequency control unit 4 causes the frequency of the current passed through the excitation coil 2a to vary so as to detect a frequency at which the induced voltage in the detection coil 3a becomes zero, and based on the frequency thus detected, calculates (estimates) a moving or rotating speed of the relative moving body 6 using Formula (2) below.

Moving (Rotating) Speed of Relative Moving Body 6 = Diameter of Detection Coil

3a x Frequency of Current Passed Through Excitation Coil 2a ... (2)

More specifically, the magnetic flux frequency control unit 4 gradually increases the frequency of the current passed through the excitation coil 2a from a predetermined low frequency value as an initial frequency value and selects a frequency value at which the induced voltage in the detection coil 3a becomes zero for the first time.

As described above, in the second embodiment, the frequency at which the direction of the current flowing through the excitation coil 2a is switched is controlled so that the induced voltage in the detection coil 3a becomes zero. Using a current switching frequency of the excitation coil 2a at which the induced voltage in the detection coil 3a becomes zero, the moving or rotating speed of the relative moving body 6 can be simply and accurately estimated.

In the first embodiment, the rotor 8 is used as the magnetic flux producing unit 2, and thus a mechanical mechanism for rotating the rotor 8 is required, whereas in the second embodiment, the excitation coil 2a is used as the magnetic flux producing unit 2, and thus it is only required to switch a direction of a current flowing through the excitation coil 2a, thus eliminating the need for a mechanical mechanism and providing a configuration more resistant to breakage and further improved in maintainability.

(Third Embodiment) A third embodiment uses a voice coil unit as the magnetic flux producing unit 2.

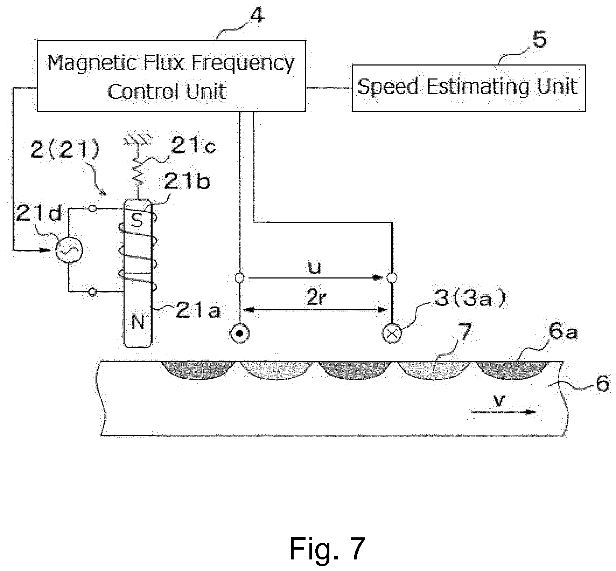

Fig. 7 is a view showing a schematic configuration of a speed detecting device 1 according to the third embodiment. Similarly to the speed detecting device 1 shown in Fig. 1, the speed detecting device 1 shown in Fig. 7 includes a magnetic flux producing unit 2, a magnetic flux detecting unit 3, a magnetic flux frequency control unit 4, and a speed estimating unit 5.

The magnetic flux producing unit 2 shown in Fig. 7 includes a voice coil unit 21. The voice coil unit 21 includes a permanent magnet 21a, a voice coil 21b, and a spring member 21c. The permanent magnet 21a has two magnetic poles disposed along a direction normal to a principal surface 6a of a relative moving body 6. The voice coil 21b is wound on the permanent magnet 21a. The spring member 21c is connected to one end side of the permanent magnet 21a. An alternating current from a power source 21d is passed through the voice coil 21b, and thus a force is applied to the permanent magnet 21a to cause the spring member 21c to expand or contract, so that there occurs a change in gap between the magnetic pole of the permanent magnet 21a on the other end side and the principal surface 6a of the relative moving body 6.

When a current is passed through the voice coil 21b, a force is applied to the permanent magnet 21a by a Lorentz force acting between the voice coil 21b and a magnetic field of the permanent magnet 21a. A direction of the Lorentz force changes with a direction of the current passed through the voice coil 21b. Thus, the permanent magnet 21a vibrates in accordance with a current switching frequency of the voice coil 21b, so that there occurs a change in gap between a distal end portion of the magnetic pole of the permanent magnet 21a on the other end side and the principal surface 6a of the relative moving body 6.

The smaller the gap, the higher an intensity of magnetization of a magnetization pattern 7 on the principal surface 6a of the relative moving body 6, and the larger the gap, the lower the intensity of magnetization of the magnetization pattern 7 on the principal surface 6a of the relative moving body 6. Therefore, on the principal surface 6a of the relative moving body 6, two types of magnetization patterns 7 different in intensity of magnetization are alternately formed in synchronization of vibrations of the permanent magnet 21a.

While in the first and second embodiments, two types of magnetization patterns 7 having different polarities are alternately formed on the principal surface 6a of the relative moving body 6, in this embodiment, two types of magnetization patterns 7 different in intensity of magnetization are formed thereon.

A detection coil 3a has a diameter defined by, for example, a combined size of two adjacent magnetization patterns 7. Therefore, magnetic fluxes from the two adjacent magnetization patterns 7 are linked with the detection coil 3a. These magnetic fluxes are the same in direction and thus, unlike in the first and second embodiments, the magnetic fluxes are not cancelled out.

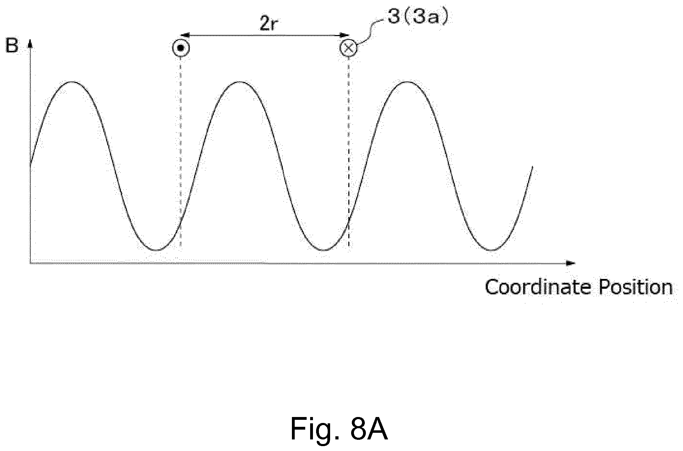

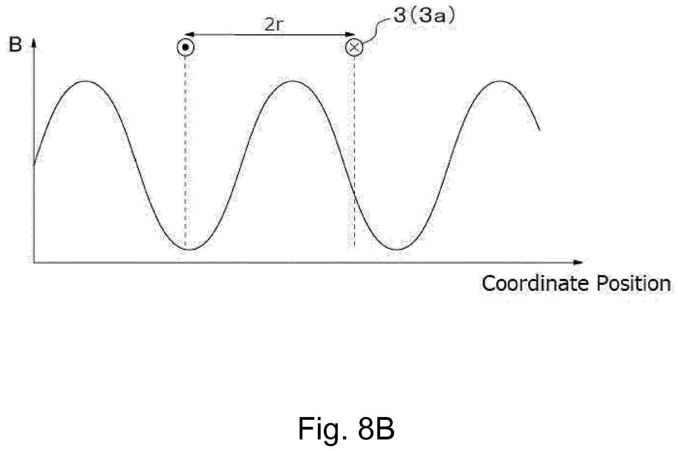

Fig. 8A and Fig. 8B are each a graph of a density of magnetic fluxes linked with the detection coil 3a. In each of these graphs, a horizontal axis indicates a coordinate position of the relative moving body 6 in a moving or rotating direction thereof, and a vertical axis indicates a magnetic flux density B[T]. In a case where one cycle of high and low intensity values of magnetization of the magnetization patterns 7 is included across the detection coil 3a, a density of magnetic fluxes linked with the detection coil 3a is as shown in the graph of Fig. 8A. In this case, an amount of magnetic fluxes lined with the detection coil 3a is constant at all time, thus causing no change in magnetic flux, so that no induced voltage is produced in the detection coil 3a. In a case where one cycle of high and low intensity values of magnetization of the magnetization patterns 7 is not included across the detection coil 3a, a density of magnetic fluxes linked with the detection coil 3a is as shown in the graph of Fig. 8B. In this case, an amount of magnetic fluxes lined with the detection coil 3a changes with time, so that an induced voltage is produced in the detection coil 3a.

Therefore, the magnetic flux frequency control unit 4 controls the current switching frequency of the voice coil 21b so that the induced voltage detected by the detection coil 3a becomes zero and estimates a moving or rotating speed of the relative moving body 6, based on the current switching frequency of the voice coil 21b at the time when the induced voltage is zero and a diameter of the detection coil 3a.

As described above, in the third embodiment, the current switching frequency of the voice coil 21b is controlled so that the induced voltage detected by the detection coil 3a becomes zero, and thus the moving or rotating speed of the relative moving body 6 can be estimated based on the current switching frequency of the voice coil 21b at the time when the induced voltage is zero and the diameter of the detection coil 3a. In the third embodiment, the permanent magnet 21a having a strong magnetic force is used, and thus even when a current passed through the voice coil 21b is small, the magnetization patterns 7 can be formed on the principal surface 6a of the relative moving body 6, so that power consumption may be reduced more than in the first and second embodiments.

(Fourth Embodiment) While in the first and second embodiments, the rotating speed of the rotor 8 or the current switching frequency of the excitation coil 2a is controlled in accordance with the moving or rotating speed of the relative moving body 6, a configuration including no such control is also possible.

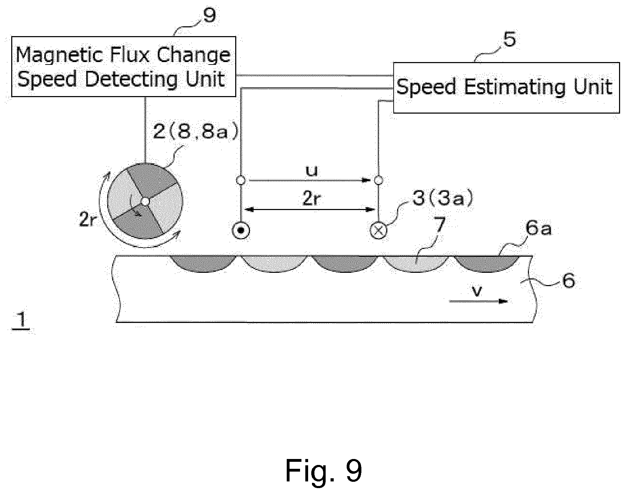

However, in the fourth embodiment, as well as in Figures 9-12 the flux frequency is not controlled such that the induced voltage becomes zero, so that the fourth embodiment is not covered by the claims.

Fig. 9 is a view showing a schematic configuration of a speed detecting device 1 according to a fourth embodiment. The speed detecting device 1 shown in Fig. 9 includes a magnetic flux producing unit 2, a magnetic flux detecting unit 3, a magnetic flux change speed detecting unit 9, and a speed estimating unit 5. The magnetic flux producing unit 2 and the magnetic flux detecting unit 3 are configured similarly to those in Fig. 5.

The magnetic flux producing unit 2 is, for example, a rotor 8 rotatable about a rotation axis, and the rotor 8 of this embodiment is caused to rotate by a magnetic flux produced by an eddy current, the eddy current being produced on a principal surface 6a of a relative moving body 6 based on a moving or rotating speed of the relative moving body 6. The speed detecting device 1 shown in Fig. 9 does not include the magnetic flux frequency control unit 4 shown in Fig. 1, and thus the rotor 8 performs a passive rotary operation in which the rotor 8 rotates at a rotating speed based on the moving or rotating speed of the relative moving body 6. Thus, the rotating speed of the rotor 8 is equal to or less than the moving or rotating speed of the relative moving body 6. That is, it is prerequisite to rotation of the rotor 8 that there is a difference between the rotating speed of the rotor 8 and the moving or rotating speed of the relative moving body 6.

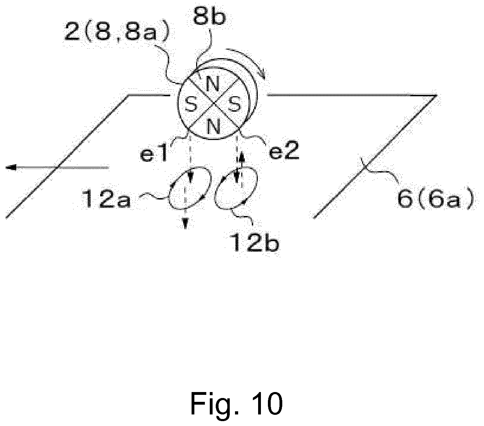

Fig. 10 shows an example in which the principal surface 6a of the relative moving body 6 is disposed to be opposed to an outer peripheral surface of the rotor 8 while a predetermined gap is maintained therebetween. The principal surface 6a of the relative moving body 6 may be a flat surface or a curved surface. In a typical example, the relative moving body 6 is a rotor, and the principal surface 6a of the relative moving body 6 is an outer peripheral surface of the rotor.

The relative moving body 6 moves in magnetic fluxes from magnetic poles 8b of a permanent magnet 8a of the rotor 8, so that an eddy current is produced on the principal surface 6a of the relative moving body 6. A direction of the eddy current depends on a moving direction of the relative moving body 6. While a description is given herein of an example in which the relative moving body 6 itself moves, movement of the relative moving body 6 also encompasses a case where the relative moving body 6 itself stops moving, and the rotor 8 moves. That is, movement of the relative moving body 6 refers to relative movement between the relative moving body 6 and the rotor 8. A gap between the principal surface 6a of the relative moving body 6 and the rotor 8 is limited to such a range that magnetic fluxes from the magnetic poles 8b of the permanent magnet 8a of the rotor 8 can reach the principal surface 6a of the relative moving body 6.

The magnetic poles 8b of the permanent magnet 8a are magnetized in a direction toward the principal surface 6a of the relative moving body 6 opposed thereto or a direction opposite thereto. Furthermore, magnetization directions of each pair of adjacent ones of the magnetic poles 8b of the permanent magnet 8a are opposite to each other. In Fig. 10, magnetization directions of the magnetic poles 8b of the permanent magnet 8a are indicated by arrows.

As shown in Fig. 10, based on a polarity of each of the magnetic poles 8b of the permanent magnet 8a disposed to be opposed to the principal surface 6a of the relative moving body 6, an eddy current is produced on the principal surface 6a of the relative moving body 6. When the relative moving body 6 moves or rotates, an eddy current is produced on the principal surface 6a of the relative moving body 6 in such a direction as to hinder a change in magnetic flux from the rotor 8. The rotor 8 rotates by an interaction (a repulsive force and an attractive force) between a magnetic flux produced by the eddy current and the magnetic flux from the rotor 8. A surface speed of a principal surface of the rotor 8 is lower than a surface speed of the principal surface 6a of the relative moving body 6 opposed thereto.

For example, when an N-pole of the rotor 8 is disposed to be opposed to the principal surface 6a of the relative moving body 6, a direction of an eddy current 12a produced on the principal surface 6a of the relative moving body 6 at a portion reached by a magnetic flux from an edge e1 of the N-pole at the front in a rotational direction is different from a direction of an eddy current 12b produced on the principal surface 6a of the relative moving body 6 at a portion reached by a magnetic flux from an edge e2 of the N-pole at the rear in the rotational direction. The eddy current 12b produced by the magnetic flux from the edge e2 of the N-pole at the rear in the rotational direction flows in such a direction as to produce a magnetic flux in an opposite direction to a direction of a magnetic flux from the N-pole. On the other hand, the eddy current 12a produced on the principal surface 6a of the relative moving body 6 at a portion reached by the magnetic flux from the edge e1 of the N-pole at the front in the rotational direction flows in such a direction as to produce a magnetic flux in the same direction as the direction of the magnetic flux from the N-pole. The eddy currents 12a and 12b both flow in such directions as to hinder a change in magnetic flux from the rotor 8 caused by rotation of the relative moving body 6.

As described above, on the edge e1 side of the N-pole of the rotor 8 at the front in the rotational direction, the direction of the magnetic flux produced by the eddy current 12a is the same as the direction of the magnetic flux from the N-pole of the rotor 8, and thus an attractive force acts therebetween. On the other hand, on the edge e2 side of the N-pole of the rotor 8 at the rear in the rotational direction, the direction of the magnetic flux produced by the eddy current 12b is opposite to the direction of the magnetic flux from the N-pole of the rotor 8, and thus a repulsive force acts therebetween. When the surface speed of the outer peripheral surface of the rotor 8 is lower than the surface speed of the principal surface 6a of the relative moving body 6 opposed thereto, the above-described relationship between the rotor 8 and the eddy currents 12a and 12b holds true at all time. Thus, the rotor 8 rotates at a surface speed lower than the surface speed of the principal surface 6a of the relative moving body 6 opposed thereto, so as to run after a moving surface of the principal surface 6a of the relative moving body 6 opposed thereto.

The above principle of rotation of the rotor 8 can also be described in terms of a repulsive force based on a Lorentz force. As described above, the direction of the eddy current 12a produced by the magnetic flux from the edge e1 of the N-pole of the rotor 8 at the front in the rotational direction is opposite to the direction of the eddy current 12b produced by the magnetic flux from the edge e2 of the N-pole of the rotor 8 at the rear in the rotational direction, and thus a current flows in a constant direction under the N-pole at all time. When the relative moving body 6 rotates in a direction indicated by an arrow shown in Fig. 10, currents produced by the eddy currents 12a and 12b are subjected to a Lorentz force in a direction opposite to a rotational direction of the relative moving body 6. Therefore, the rotor 8 subjected to the magnetic fluxes produced by the eddy currents 12a and 12b rotates under a repulsive force based on the Lorentz force, the repulsive force acting in the rotational direction of the relative moving body 6. As described above, the rotor 8 and the relative moving body 6 move in the same direction at the opposed surfaces thereof.

The magnetic flux change speed detecting unit 9 shown in Fig. 9 detects a frequency at which the magnetic flux producing unit 2 causes a change in magnetic flux.

The speed estimating unit 5 determines beforehand a correspondence relationship between the frequency at which the magnetic flux producing unit 2 causes a change in magnetic flux and the moving or rotating speed of the relative moving body 6 and stores it, for example, in a table. Further, based on the frequency detected by the magnetic flux change speed detecting unit 9, the speed estimating unit 5 refers to the table (a storage unit) and thus estimates the moving or rotating speed of the relative moving body 6. It is also possible that, instead of using a table, a function formula representing the above-described correspondence relationship is prepared beforehand, and the frequency detected by the magnetic flux change speed detecting unit 9 is substituted into this function formula, and thus the moving or rotating speed of the relative moving body 6 is estimated.

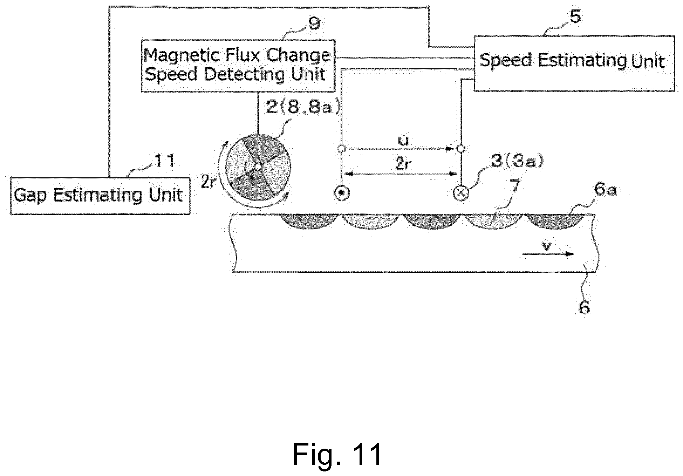

Meanwhile, the rotating speed of the rotor 8 changes with a distance (a gap) between the principal surface 6a of the relative moving body 6 and the outer peripheral surface of the rotor 8. Thus, as shown in Fig. 11, a gap estimating unit 11 may be provided in the speed detecting device 1.

For example, the gap estimating unit 11 uses an unshown coil provided at a position linked with a magnetic flux of the permanent magnet 8a of the rotor 8 and, based on a current flowing through this coil and an induced voltage, estimates a gap between the relative moving body 6 and an excitation coil 2a.

The gap estimating unit 11 estimates the gap by an impedance analysis technique. More specifically, the gap estimating unit 11 estimates the gap based on a comparison between an inductance of the above-described coil calculated based on a current flowing through the coil and an induced voltage and an inductance of a coil corresponding to a preset reference value of the gap.

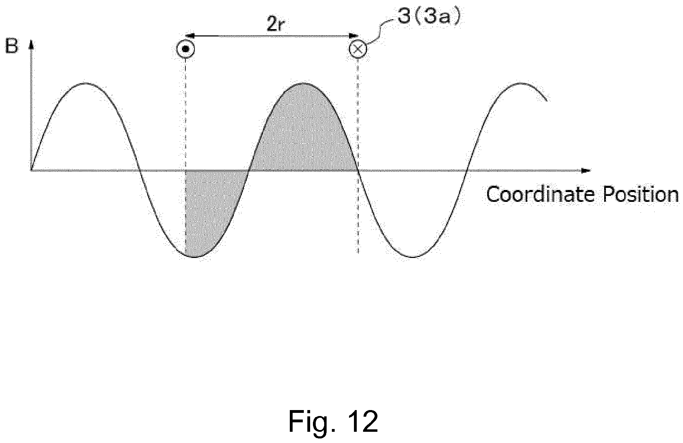

Fig. 12 is a graph showing a density of magnetic fluxes linked with the detection coil 3a. In the graph of Fig.

12, a horizontal axis indicates a coordinate position of the relative moving body 6 in a moving or rotating direction thereof, and a vertical axis indicates a magnetic flux density B[T]. Unlike in the graph of Fig. 4, in the graph of Fig. 12, an amount of magnetic fluxes in a positive direction and an amount of magnetic fluxes in a negative direction, which are linked with the detection coil 3a, are not equal to each other, and thus an induced voltage is induced in the detection coil 3a.

In a case where the gap is taken into consideration, based on the rotating speed of the rotor 8 detected by the magnetic flux change speed detecting unit 9, the induced voltage in the detection coil 3a detected by the magnetic flux detecting unit 3, and the gap estimated by the gap estimating unit 11, the speed estimating unit 5 estimates the moving or rotating speed of the relative moving body 6. It is also possible that a correspondence relationship among the rotating speed of the rotor 8, the induced voltage in the detection coil 3a, the gap, and the moving or rotating speed of the relative moving body 6 is stored beforehand in a table, and by referring to the table (the storage unit), the moving or rotating speed of the relative moving body 6 is estimated. Alternatively, it is also possible that the rotating speed of the rotor 8, the induced voltage in the detection coil 3a, and the gap are inputted to an arithmetic formula obtained by mathematizing the above-described correspondence relationship, and thus the moving or rotating speed of the relative moving body 6 is determined.

As described above, in the fourth embodiment, the moving or rotating speed of the relative moving body 6 can be estimated without performing rotation control of the rotor 8, and thus there can be obtained a more simplified configuration than those of the speed detecting devices 1 according to the first to third embodiments. Furthermore, it is also possible to take into consideration the gap between the rotor 8 and the principal surface 6a of the relative moving body 6 in estimating the moving or rotating speed of the relative moving body 6, and thus estimation accuracy can be improved.

The concept of the above-described relative moving body 6 in each of the foregoing first to fourth embodiments includes not only a relative moving body that itself moves or rotates but also a relative moving body that moves relative to the speed detecting device 1. Therefore, in the first to fourth embodiments, in a case where the speed detecting device 1 is installed in a train or the like, a fixture such as a rail that moves relative to the train or the like is also construed as being included in the concept of the relative moving body 6.

**Claims**

1. A speed detecting device (1), comprising:

   a magnetic flux producing unit (2) spaced apart from a principal surface (6a) of a relative moving body (6) and configured to produce a magnetic flux changing at a predetermined frequency so that a magnetization pattern (7) is formed on the principal surface (6a) in accordance with movement or rotation of the relative moving body (6);
   a magnetic flux detecting unit (3) spaced apart from the principal surface (6a) of the relative moving body (6) configured to detect an induced voltage induced based on a magnetic flux produced by the magnetization pattern (7) on the principal surface (6a); and including a detection coil (3a) having a predetermined diameter,
   a magnetic flux frequency control unit (4) configured for controlling the predetermined frequency such that the interval between 2n, where n is an integer of 1 or more, of the formed magnetization patterns (7) is equal to the known diameter of the detection coil (3a), so that the induced voltage detected by the magnetic flux detecting unit (3) becomes zero; and
   a speed estimating unit (5) configured for estimating a moving or rotating speed of the relative moving body (6) in a state where the induced voltage detected by the magnetic flux detecting unit (3) is zero, based on the predetermined frequency controlled by the magnetic flux frequency control unit (4).

2. The speed detecting device (1) according to claim 1, wherein the magnetic flux producing unit (2) includes a rotor (8) having a permanent magnet (8a) rotatable about a rotation axis,

   wherein the permanent magnet (8a) includes a plurality of magnetic poles (8b) arranged in a circumferential direction of the rotor (8),
   wherein the magnetization pattern (7) is formed in accordance with rotation of the rotor (8) by a magnetic flux from the magnetic poles (8b) spaced apart from and opposed to the principal surface (6a) of the relative moving body (6),
   and
   wherein the magnetic flux frequency control unit (4) is configured such that it controls the rotating speed of the rotor (8) to be equal to the moving or rotating speed of the relative moving body (6) so that the induced voltage detected by the detection coil (3a) becomes zero.

3. The speed detecting device (1) according to claim 2, configured such that during a time period in which the relative moving body (6) is moving or rotating, the magnetic flux frequency control unit (4) continuously controls the rotating speed of the rotor (8) so that the induced voltage detected by the detection coil (3a) becomes zero.

4. The speed detecting device (1) according to any one of claims 1 to 3, further comprising:

a magnetic flux change speed detecting unit (9) for detecting the predetermined frequency at which the magnetic flux producing unit (2) causes a change in magnetic flux,
wherein the speed estimating unit (5) is configured such that it estimates the moving or rotating speed of the relative moving body (6) in a state where the induced voltage detected by the magnetic flux detecting unit (3) is zero, based on the predetermined frequency detected by the magnetic flux change speed detecting unit (9).

5. The speed detecting device (1) according to claim 1, wherein the magnetic flux producing unit (2) includes an excitation coil (2a) for producing a magnetic flux changing a polarity of the magnetization pattern (7) at the predetermined frequency, the magnetization pattern (7) being formed on the principal surface (6a) of the relative moving body (6),

wherein the magnetic flux detecting unit (3) includes a detection coil (3a) having a predetermined diameter,
wherein the magnetic flux frequency control unit (4) is configured such that it controls the predetermined frequency so that the induced voltage detected by the detection coil (3a) becomes zero, and
wherein the speed estimating unit (5) is configured such that it estimates the moving or rotating speed of the relative moving body (6) in a state where the induced voltage detected by the detection coil (3a) is zero, based on the predetermined frequency controlled by the magnetic flux frequency control unit (4) so that the induced voltage detected by the detection coil (3a) becomes zero and the diameter of the detection coil (3a).

6. The speed detecting device (1) according to claim 5, wherein the magnetic flux frequency control unit (4) is configured such that it

gradually increases the predetermined frequency
from a predetermined initial frequency value lower than the moving or rotating speed of the relative moving body (6) and causes a change in magnetic flux of the excitation coil (2a) at a frequency value at which the induced voltage detected by the detection coil (3a) becomes zero for the first time, and
wherein the speed estimating unit (5) is configured such that it estimates the moving or rotating speed of the relative moving body (6) by obtaining a product of the diameter of the detection coil (3a) and the frequency value of the predetermined frequency having being controlled by the magnetic flux frequency control unit (4).

7. The speed detecting device (1) according to claim 1, wherein the magnetic flux producing unit (2) includes an excitation coil (2a) for producing a magnetic flux changing an intensity of magnetization of the magnetization pattern (7) at the predetermined frequency, the magnetization pattern (7) being formed on the principal surface (6a) of the relative moving body (6),

wherein the magnetic flux detecting unit (3) includes a detection coil (3a) having a predetermined diameter,
wherein the magnetic flux frequency control unit (4) is configured such that it controls the predetermined frequency so that the induced voltage detected by the detection coil (3a) becomes zero, and
wherein the speed estimating unit (5) is configured such that it estimates the moving or rotating speed of the relative moving body (6) in a state where the induced voltage detected by the detection coil (3a) is zero, based on the predetermined frequency controlled by the magnetic flux frequency control unit (4) and the diameter of the detection coil (3a).

8. The speed detecting device (1) according to claim 7, wherein the magnetic flux producing unit (2) includes:

a permanent magnet (8a) spaced apart from and opposed to the principal surface (6a) of the relative moving body (6); and
a voice coil (21b) is configured for causing a change in gap between the principal
surface (6a) of the relative moving body (6) and the permanent magnet (8a) at the predetermined frequency.

9. The speed detecting device (1) according to any one of claims 1 to 8, wherein the relative moving body (6) is a wheel of a train or a rail, and

wherein the predetermined frequency is arranged to have
a frequency value different from
a vibration frequency band of the train.

10. A speed detecting method, comprising steps of:

producing, at a position spaced apart from a principal surface (6a) of a relative moving body (6), a magnetic flux changing at a predetermined frequency so that a magnetization pattern (7) is formed on the principal surface (6a) in accordance with movement or rotation of the relative moving body (6);

detecting, at a position spaced apart from the principal surface (6a) of the relative moving body (6), an induced voltage induced based on a magnetic flux produced by the magnetization pattern (7) on the principal surface (6a) using a detection coil (3a) having a predetermined diameter;

controlling the predetermined frequency such that the interval between 2n, where n is an integer of 1 or more, of the formed magnetization patterns (7) is equal to the known diameter of the detection coil (3a), so that the induced voltage detected becomes zero; and

estimating a moving or rotating speed of the relative moving body (6) in a state where the induced voltage is zero, based on the predetermined frequency controlled.

**Patentansprüche**

1. Geschwindigkeits-Erfassungsvorrichtung (1), die umfasst:

eine Einheit (2) zum Erzeugen von Magnetfluss, die von einer Hauptfläche (6a) eines Relativbewegungs-Körpers (6) beabstandet und so ausgeführt ist, dass sie einen Magnetfluss erzeugt, der sich mit einer vorgegebenen Frequenz ändert, so dass ein Magnetisierungs-Muster (7) an der Hauptfläche (6a) entsprechend Bewegung oder Drehung des Relativbewegungs-Körpers (6) ausgebildet wird;

eine Einheit (3) zum Erfassen von Magnetfluss, die von der Hauptfläche (6a) des Relativbewegungs-Körpers (6) beabstandet und so ausgeführt ist, dass sie eine induzierte Spannung erfasst, die auf Basis eines durch das Magnetisierungs-Muster (7) an der Hauptfläche (6a) erzeugten Magnetflusses induziert wird; und eine Erfassungsspule (3a) mit einem vorgegebenen Durchmesser, sowie eine Einheit (4) zum Steuern einer Magnetfluss-Frequenz enthält, die so ausgeführt ist, dass sie die vorgegebene Frequenz so steuert, dass das Intervall zwischen 2n der ausgebildeten Magnetisierungs-Muster (7) dem bekannten Durchmesser der Erfassungsspule (3a) gleich ist und die durch die Einheit (3) zum Erfassen von Magnetfluss erfasste induzierte Spannung Null wird, wobei n eine ganze Zahl gleich 1 oder größer ist; und

eine Einheit (5) zum Schätzen von Geschwindigkeit, die so ausgeführt ist, dass sie auf Basis der durch die Einheit (4) zum Steuern einer Magnetfluss-Frequenz gesteuerten vorgegebenen Frequenz eine Bewegungs- oder Drehgeschwindigkeit des Relativbewegungs-Körpers (6) in einem Zustand schätzt, in dem die durch die Einheit (3) zum Erfassen von Magnetfluss erfasste induzierte Spannung Null beträgt.

2. Geschwindigkeits-Erfassungsvorrichtung (1) nach Anspruch 1, wobei die Einheit (2) zum Erzeugen von Magnetfluss einen Rotor (8) mit einem Permanentmagneten (8a) enthält, der um eine Drehachse herum gedreht werden kann,

der Permanentmagnet (8a) eine Vielzahl von Magnetpolen (8b) enthält, die in einer Umfangsrichtung des Rotors (8) angeordnet sind,

das Magnetisierungs-Muster (7) entsprechend Drehung des Rotors (8) durch einen Magnetfluss von den Magnetpolen (8b) ausgebildet wird, die von der Hauptfläche (6a) des Relativbewegungs-Körpers (6) beabstandet sind und ihr gegenüberliegen,

und

die Einheit (4) zum Steuern einer Magnetfluss-Frequenz so ausgeführt ist, dass sie die Drehgeschwindigkeit des Rotors (8) so steuert, dass sie der Bewegungs- oder Drehgeschwindigkeit des Relativbewegungs-Körpers (6) gleich ist, so dass die durch die Erfassungsspule (3a) erfasste induzierte Spannung Null wird.

3. Geschwindigkeits-Erfassungsvorrichtung (1) nach Anspruch 2, die so ausgeführt ist, dass während eines Zeitraums, in dem sich der Relativbewegungs-Körper (6) bewegt oder dreht, die Einheit (4) zum Steuern einer Magnetfluss-Frequenz die Drehgeschwindigkeit des Rotors (8) kontinuierlich so steuert, dass die durch die Erfassungsspule (3a) erfasste induzierte Spannung Null wird.

4.  Geschwindigkeits-Erfassungsvorrichtung (1) nach einem der Ansprüche 1 bis 3, die des Weiteren umfasst:

    eine Einheit (9) zum Erfassen von Magnetfluss-Änderungsgeschwindigkeit, mit der die vorgegebene Frequenz erfasst wird, bei der die Einheit (2) zum Erzeugen von Magnetfluss eine Änderung des Magnetflusses bewirkt, wobei die Einheit (5) zum Schätzen von Geschwindigkeit so ausgeführt ist, dass sie auf Basis der durch die Einheit (9) zum Erfassen von Magnetfluss-Änderungsgeschwindigkeit erfassten vorgegebenen Frequenz die Bewegungs- oder Drehgeschwindigkeit des Relativbewegungs-Körpers (6) in einem Zustand schätzt, in dem die durch die Einheit (3) zum Erfassen von Magnetfluss erfasste induzierte Spannung Null beträgt.

5.  Geschwindigkeits-Erfassungsvorrichtung (1) nach Anspruch 1, wobei die Einheit (2) zum Erzeugen von Magnetfluss eine Erregerspule (2a) zum Erzeugen eines Magnetflusses enthält, der eine Polarität des Magnetisierungs-Musters (7) mit der vorgegebenen Frequenz ändert, wobei das Magnetisierungs-Muster (7) an der Hauptfläche (6a) des Relativbewegungs-Körpers (6) ausgebildet ist,

    die Einheit (3) zum Erfassen von Magnetfluss eine Erfassungsspule (3a) mit einem vorgegebenen Durchmesser enthält,
    die Einheit (4) zum Steuern einer Magnetfluss-Frequenz so ausgeführt ist, dass sie die vorgegebene Frequenz so steuert, dass die durch die Erfassungsspule (3a) erfasste induzierte Spannung Null wird, und
    die Einheit (5) zum Schätzen von Geschwindigkeit so ausgeführt ist, dass sie auf Basis der vorgegebenen Frequenz, die durch die Einheit (4) zum Steuern einer Magnetfluss-Frequenz so gesteuert wird, dass die durch die Erfassungsspule (3a) erfasste induzierte Spannung Null wird, sowie des Durchmessers der Erfassungsspule (3a) die Bewegungs- oder Drehgeschwindigkeit des Relativbewegungs-Körpers (6) in einem Zustand schätzt, in dem die durch die Erfassungsspule (3a) erfasste induzierte Spannung Null beträgt.

6.  Geschwindigkeits-Erfassungsvorrichtung (1) nach Anspruch 5, wobei die Einheit (4) zum Steuern einer Magnetfluss-Frequenz so ausgeführt ist, dass sie die vorgegebene Frequenz von einem vorgegebenen Anfangs-Frequenzwert, der niedriger ist als die Bewegungs- oder Drehgeschwindigkeit des Relativbewegungs-Körpers (6), ausgehend allmählich erhöht und eine Änderung des Magnetflusses der Erregerspule (2a) mit einem Frequenzwert bewirkt, bei dem die durch die Erfassungsspule (3a) erfasste induzierte Spannung zum ersten Mal Null wird, und
    die Einheit (5) zum Schätzen von Geschwindigkeit so ausgeführt ist, dass sie die Bewegungs- oder Drehgeschwindigkeit des Relativbewegungs-Körpers (6) schätzt, indem sie ein Produkt aus dem Durchmesser der Erfassungsspule (3a) und dem Frequenzwert der durch die Einheit (4) zum Steuern einer Magnetfluss-Frequenz gesteuerten vorgegebenen Frequenz ermittelt.

7.  Geschwindigkeits-Erfassungsvorrichtung (1) nach Anspruch 1, wobei die Einheit (2) zum Erzeugen von Magnetfluss eine Erregerspule (2a) zum Erzeugen eines Magnetflusses enthält, der eine Intensität von Magnetisierung des Magnetisierungs-Musters (7) mit der vorgegebenen Frequenz ändert, wobei das Magnetisierungs-Muster (7) an der Hauptfläche (6a) des Relativbewegungs-Körpers (6) ausgebildet ist,

    die Einheit (3) zum Erfassen von Magnetfluss eine Erfassungsspule (3a) mit einem vorgegebenen Durchmesser enthält,
    die Einheit (4) zum Steuern einer Magnetfluss-Frequenz so ausgeführt ist, dass sie die vorgegebene Frequenz so steuert, dass die durch die Erfassungsspule (3a) erfasste induzierte Spannung Null wird, und
    die Einheit (5) zum Schätzen von Geschwindigkeit so ausgeführt ist, dass sie auf Basis der durch die Einheit (4) zum Steuern einer Magnetfluss-Frequenz gesteuerten vorgegebenen Frequenz sowie des Durchmessers der Erfassungsspule (3a) die Bewegungs- oder Drehgeschwindigkeit des Relativbewegungs-Körpers (6) in einem Zustand schätzt, in dem die durch die Erfassungsspule (3a) erfasste induzierte Spannung Null beträgt.

8.  Geschwindigkeits-Erfassungsvorrichtung (1) nach Anspruch 7, wobei die Einheit (2) zum Erzeugen von Magnetfluss enthält:

    einen Permanentmagneten (8a), der von der Hauptfläche (6a) des Relativbewegungs-Körpers (6) beabstandet ist und ihr gegenüberliegt; sowie
    eine Schwingspule (21b), die so ausgeführt ist, dass sie eine Änderung eines Spalts zwischen der Hauptfläche (6a) des Relativbewegungs-Körpers (6) und dem Permanentmagneten (8a) bei der vorgegebenen Frequenz bewirkt.

9.  Geschwindigkeits-Erfassungsvorrichtung (1) nach einem der Ansprüche 1 bis 8, wobei der Relativbewegungs-Körper (6) ein Rad eines Zuges oder eine Schiene ist, und
die vorgegebene Frequenz so eingerichtet ist, dass sie einen Frequenzwert hat, der sich von einem Schwingungs-Frequenzband des Zuges unterscheidet.

**10.** Geschwindigkeitserfassungs-Verfahren, das die folgenden Schritte umfasst:

Erzeugen eines Magnetflusses, der sich mit einer vorgegebenen Frequenz ändert, an einer Position, die von einer Hauptfläche (6a) eines Relativbewegungs-Körpers (6) beabstandet ist, so dass ein Magnetisierungs-Muster (7) an der Hauptfläche (6a) entsprechend Bewegung oder Drehung des Relativbewegungs-Körpers (6) ausgebildet wird;
Erfassen einer induzierten Spannung, die auf Basis eines durch das Magnetisierungs-Muster (7) an der Hauptfläche (6a) erzeugten Magnetflusses induziert wird, unter Verwendung einer Erfassungsspule (3a) mit einem vorgegebenen Durchmesser an einer von der Hauptfläche (6a) des Relativbewegungs-Körpers (6) beabstandeten Position;
Steuern der vorgegebenen Frequenz, so dass das Intervall zwischen 2n der ausgebildeten Magnetisierungs-Muster (7) dem bekannten Durchmesser der Erfassungsspule (3a) gleich ist und die erfasste induzierte Spannung Null wird, wobei n eine ganze Zahl gleich 1 oder größer ist; und
Schätzen einer Bewegungs- oder Drehgeschwindigkeit des Relativbewegungs-Körpers (6) auf Basis der vorgegebenen gesteuerten Frequenz in einem Zustand, in dem die induzierte Spannung Null beträgt.

## Revendications

**1.** Dispositif de détection de vitesse (1), comprenant :

une unité de production de flux magnétique (2) espacée d'une surface principale (6a) d'un corps mobile relatif (6) et conçue pour produire un flux magnétique changeant à une fréquence prédéterminée de telle sorte qu'un profil de magnétisation (7) est formé sur la surface principale (6a) conformément à un déplacement ou une rotation du corps mobile relatif (6) ;
une unité de détection de flux magnétique (3) espacée de la surface principale (6a) du corps mobile relatif (6) conçue pour détecter une tension induite qui est induite sur la base d'un flux magnétique produit par le profil de magnétisation (7) sur la surface principale (6a) ; et incluant une bobine de détection (3a) présentant un diamètre prédéterminé,
une unité de commande de fréquence de flux magnétique (4) conçue pour commander la fréquence prédéterminée de telle sorte que l'intervalle entre 2n, où n est un entier de 1 ou plus, des profils de magnétisation (7) formés est égal au diamètre connu de la bobine de détection (3a), de telle sorte que la tension induite détectée par l'unité de détection de flux magnétique (3) devient nulle ; et
une unité d'estimation de vitesse (5) conçue pour estimer une vitesse de déplacement ou de rotation du corps mobile relatif (6) dans un état où la tension induite détectée par l'unité de détection de flux magnétique (3) est nulle, sur la base de la fréquence prédéterminée commandée par l'unité de commande de fréquence de flux magnétique (4).

**2.** Dispositif de détection de vitesse (1) selon la revendication 1, dans lequel l'unité de production de flux magnétique (2) inclut un rotor (8) présentant un aimant permanent (8a) pouvant tourner autour d'un axe de rotation,

dans lequel l'aimant permanent (8a) inclut une pluralité de pôles magnétiques (8b) agencés dans une direction circonférentielle du rotor (8),
dans lequel le profil de magnétisation (7) est formé conformément à une rotation du rotor (8) par un flux magnétique provenant des pôles magnétiques (8b) espacés de la surface principale (6a) du corps mobile relatif (6) et opposés à celle-ci,
et
dans lequel l'unité de commande de fréquence de flux magnétique (4) est conçue de telle sorte qu'elle commande la vitesse de rotation du rotor (8) pour qu'elle soit égale à la vitesse de déplacement ou de rotation du corps mobile relatif (6) de telle sorte que la tension induite détectée par la bobine de détection (3a) devient nulle.

**3.** Dispositif de détection de vitesse (1) selon la revendication 2, conçu de telle sorte que, durant une période de temps dans laquelle le corps mobile relatif (6) se déplace ou tourne, l'unité de commande de fréquence de flux magnétique (4) commande en continu la vitesse de rotation du rotor (8) de telle sorte que la tension induite détectée par la bobine de détection (3a) devient nulle.

4. Dispositif de détection de vitesse (1) selon l'une quelconque des revendications 1 à 3, comprenant en outre :

    une unité de détection de vitesse de changement de flux magnétique (9) pour détecter la fréquence prédéterminée à laquelle l'unité de production de flux magnétique (2) provoque un changement de flux magnétique, dans lequel l'unité d'estimation de vitesse (5) est conçue de telle sorte qu'elle estime la vitesse de déplacement ou de rotation du corps mobile relatif (6) dans un état où la tension induite détectée par l'unité de détection de flux magnétique (3) est nulle, sur la base de la fréquence prédéterminée détectée par l'unité de détection de vitesse de changement de flux magnétique (9).

5. Dispositif de détection de vitesse (1) selon la revendication 1, dans lequel l'unité de production de flux magnétique (2) inclut une bobine d'excitation (2a) pour produire un flux magnétique changeant une polarité du profil de magnétisation (7) à la fréquence prédéterminée, le profil de magnétisation (7) étant formé sur la surface principale (6a) du corps mobile relatif (6),

    dans lequel l'unité de détection de flux magnétique (3) inclut une bobine de détection (3a) présentant un diamètre prédéterminé,
    dans lequel l'unité de commande de fréquence de flux magnétique (4) est conçue de telle sorte qu'elle commande la fréquence prédéterminée de sorte que la tension induite détectée par la bobine de détection (a) devient nulle, et
    dans lequel l'unité d'estimation de vitesse (5) est conçue de telle sorte qu'elle estime la vitesse de déplacement ou de rotation du corps mobile relatif (6) dans un état où la tension induite détectée par la bobine de détection (3a) est nulle, sur la base de la fréquence prédéterminée commandée par l'unité de commande de fréquence de flux magnétique (4) de telle sorte que la tension induite détectée par la bobine de détection (3a) devient nulle et du diamètre de la bobine de détection (3a).

6. Dispositif de détection de vitesse (1) selon la revendication 5, dans lequel l'unité de commande de fréquence de flux magnétique (4) est conçue de telle sorte qu'elle augmente progressivement la fréquence prédéterminée depuis une valeur de fréquence initiale prédéterminée inférieure à la vitesse de déplacement ou de rotation du corps mobile relatif (6) et provoque un changement de flux magnétique de la bobine d'excitation (2a) à une valeur de fréquence à laquelle la tension induite détectée par la bobine de détection (3a) devient nulle pour la première fois, et
dans lequel l'unité d'estimation de vitesse (5) est conçue de telle sorte qu'elle estime la vitesse de déplacement ou de rotation du corps mobile relatif (6) en obtenant un produit du diamètre de la bobine de détection (3a) et de la valeur de fréquence de la fréquence prédéterminée ayant été commandée par l'unité de commande de fréquence de flux magnétique (4).

7. Dispositif de détection de vitesse (1) selon la revendication 1, dans lequel l'unité de production de flux magnétique (2) inclut une bobine d'excitation (2a) pour produire un flux magnétique changeant une intensité de magnétisation du profil de magnétisation (7) à la fréquence prédéterminée, le profil de magnétisation (7) étant formé sur la surface principale (6a) du corps mobile relatif (6),

    dans lequel l'unité de détection de flux magnétique (3) inclut une bobine de détection (3a) présentant un diamètre prédéterminé,
    dans lequel l'unité de commande de fréquence de flux magnétique (4) est conçue de telle sorte qu'elle commande la fréquence prédéterminée de sorte que la tension induite détectée par la bobine de détection (3a) devient nulle, et
    dans lequel l'unité d'estimation de vitesse (5) est conçue de telle sorte qu'elle estime la vitesse de déplacement ou de rotation du corps mobile relatif (6) dans un état où la tension induite détectée par la bobine de détection (3a) est nulle, sur la base de la fréquence prédéterminée commandée par l'unité de commande de fréquence de flux magnétique (4) et du diamètre de la bobine de détection (3a).

8. Dispositif de détection de vitesse (1) selon la revendication 7, dans lequel l'unité de production de flux magnétique (2) inclut :

    un aimant permanent (8a) espacé de la surface principale (6a) du corps mobile relatif (6) et opposé à celle-ci ; et
    une bobine acoustique (21b) conçue pour provoquer un changement d'espace entre la surface principale (6a) du corps mobile relatif (6) et l'aimant permanent (8a) à la fréquence prédéterminée.

**9.** Dispositif de détection de vitesse (1) selon l'une quelconque des revendications 1 à 8, dans lequel le corps mobile relatif (6) est une roue d'un train ou un rail, et
dans lequel la fréquence prédéterminée est agencée pour présenter une valeur de fréquence différente d'une bande de fréquence de vibration du train.

**10.** Procédé de détection de vitesse, comprenant les étapes consistant à :

produire, à une position espacée d'une surface principale (6a) d'un corps mobile relatif (6), un flux magnétique changeant à une fréquence prédéterminée de telle sorte qu'un profil de magnétisation (7) est formé sur la surface principale (6a) conformément à un déplacement ou une rotation du corps mobile relatif (6) ;
détecter, à une position espacée de la surface principale (6a) du corps mobile relatif (6), une tension induite qui est induite sur la base d'un flux magnétique produit par le profil de magnétisation (7) sur la surface principale (6a) à l'aide d'une bobine de détection (3a) présentant un diamètre prédéterminé ;
commander la fréquence prédéterminée de telle sorte que l'intervalle entre 2n, où n est un entier de 1 ou plus, des profils de magnétisation (7) formés est égal au diamètre connu de la bobine de détection (3a), de telle sorte que la tension induite détectée devient nulle ; et
estimer une vitesse de déplacement ou de rotation du corps mobile relatif (6) dans un état où la tension induite est nulle, sur la base de la fréquence prédéterminée commandée.

Fig. 1

Fig. 2

Fig. 3

Fig. 4

Fig. 5

Fig. 6

Fig. 7

Fig. 8A

Fig. 8B

Fig. 9

Fig. 10

Fig. 11

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3462674 A
- GB 2169712 A
- DE 102011114506 A1
- EP 3309945 A1
- WO 2018047483 A1
- US 2014132155 A